# EUROPEAN PATENT APPLICATION

(11) **EP 1 970 397 A1**
(43) Date of publication of application: **17.09.2008**
(21) Application number: 07103950.7
(22) Date of filing: 12.03.2007
(51) Int. Cl.: C08G 77/06, C08G 77/46, C08G 77/08

(54) **Hydrophilic Polysiloxane Elastomers**

(71) Applicant: Schering Oy, 20101 Turku (FI)
(72) Inventor: Tiitinen, Emilia, 20700, TURKU (FI); Jukarainen, Harri, 21620 Kaarina (FI)
(74) Representative: Suominen, Kaisa Liisa

(57) **Abstract**

The present invention relates to a method for manufacturing hydrophilic polysiloxanes, wherein a hydrido-containing cyclic siloxane is reacted with a hydrophilic molecule comprising a carbon-carbon double bond, having the general formula (l) H₂C=CH-(CHR)ₙ-O-(CHR¹CR²R³)ₘR⁴ or (II) H₂C=CH-(CHR)ₙ-R⁵, wherein n is an integer from 0 to 4, m is an integer from 0 to 5, R, R¹, R², R³ and R⁴ are each independently hydrogen or a C₁ to C₆ alkyl, R⁵ is a saturated cyclic hydrocarbon containing carbonyl group, in the presence of a first catalyst to obtain a monomer, and polymerising said monomer in the presence of a second catalyst. The present invention also relates to hydrophilic polysiloxanes and to elastomers based on these polysiloxanes.

## Description

The invention relates to a method for manufacturing hydrophilic polysiloxanes and to such hydrophilic polysiloxanes. The invention also relates to a method for manufacturing hydrophilic siloxane elastomers and to such elastomers.

### BACKGROUND

Polysiloxanes are applied in many ways in medical industry, e.g. in drug delivery applications, both as coatings in conventional pills and as implantable, intravaginal or intrauterine devices. The most commonly used polysiloxane is polydimethylsiloxane (PDMS), which is a highly hydrophobic, stable and temperature resistant material. PDMS is especially suitable for use as membranes regulating the release rate of drugs. However, as PDMS is hydrophobic, it cannot be used for all drugs, depending of the hydrophilicity or hydrophobicity of the drug.

Traditionally, the release rate of the drug has been regulated by changing the parameters of the drug release system, for example by changing the surface area, the thickness of the membrane, the quantity of the drug or the amount of fillers in the membrane regulating the release. However, if a significant change of the release rate is desired or if the dimensions of the delivery device cannot be modified, the constitution of the polymer needs to be modified.

It is known that the properties of polydimethylsiloxane can be varied by adding to the polymer substituent groups that decrease or increase the release rate.

The addition of polyethylene oxide (PEO) groups into PDMS polymer can increase the release rate of drugs. Ullman et al. presents in Journal of Controlled Release 10 (1989) 251-260 membranes made of block copolymer comprising polyethylene oxide and PDMS, and the release of different steroids through these membranes. According to the publication, the release of hydrophilic steroids is increased and the release of lipophilic steroids is decreased, when the amount of PEO groups increases. The PEO groups are connected to the silicon atoms of the siloxane groups via a urea-bond.

Patent FI 107339 discloses regulating the release rate of drugs by a siloxane-based elastomer composition comprising at least one elastomer and possibly a non-crosslinked polymer, as well as a method for manufacturing said elastomer composition. The elastomer or the polymer of the composition comprises polyalkylene oxide groups as alkoxy-terminated grafts or blocks of the polysiloxane units, or a mixture of these. The alkoxy-terminated grafts or blocks are connected to the siloxane units by silicon-carbon-bonds.

Publication Hu et al. "Synthesis and drug release property of polysiloxane containing pendant long alkyl ether group", Gaofenzi Xuebao, (1) 62-67, 1997 Kexue (CA 126:200090) presents a silicon based polymer that has been grafted with ether groups. The polymer is useful when mixed with silicon rubber. The publication only discloses simple ether groups. The polymer grafted as disclosed decreases the release rate of the drugs.

US 6,346,553 discloses alkylmethylsiloxane-polyalkyleneoxide-dimethylsiloxane-copolymers, that are suitable for use as surface-active agent for both oil-water-emulsions and silicon-water-emulsion, and a method for manufacturing said copolymers. The copolymers can be manufactured by a hydrosilylation reaction between a straight chain or branched chain olefin and a cyclic siloxane, using platinum catalyst, distilling the alkylated cyclic siloxane, polymerising the mixture of said tetramethyldisiloxane and possibly another cyclic siloxane in the presence of an acidic catalyst. The obtained polymer is finally hydrosilylated with a terminally unsaturated polyalkyleneoxide polymer.

US 6,294,634 presents a method for manufacturing siloxane compositions by heating a mixture of dimethylsiloxane, alkyl-substituted cyclic siloxane and a cyclic siloxane comprising a oxyalkylene-group, in the absence of solvent. The polymerisation catalyst can be, for example, alkaline metal hydroxide, alkoxide or silanolate, Lewis acids, acidic phosphazenes or basic phosphazenes. The composition comprises only small residues of platinum or is completely free from platinum.

US 3,427,271 discloses organic polysiloxanes that are formed of dimethylsiloxane units, methyl-oxyalkylsiloxane units and siloxane units that are substituted with methyl group and a higher alkyl group. The polymerisation reaction uses platinum catalyst.

There is, however, still a need to provide a more hydrophilic polydimethyl siloxane elastomer, for example, to be able to accelerate the releasing rate of hydrophilic drugs. Said more hydrophilic PDMS elastomer also needs to have sufficient mechanical properties. It should also preferably be essentially platinum free and the drug release rate should be easily regulated.

### OBJECTS AND SUMMARY OF THE INVENTION

One object of the present invention is to provide polydimethyl siloxane elastomer that is more hydrophilic that the previously known PDMS elastomers. Another object is to provide an elastomer with which the release rate of the drug is easily controlled.

A yet another object is to provide an elastomer that also has sufficient mechanical properties. Moreover, the elastomer should also be essentially platinum free.

The present invention provides a method for manufacturing hydrophilic polysiloxanes, wherein a hydrido-containing cyclic siloxane is reacted with a hydrophilic molecule comprising a carbon-carbon double bond, having the general formula (I) or (II)

(I) H₂C=CH-(CHR)ₙ-O-(CHR¹CR²R³)ₘR⁴

(II) H₂C=CH-(CHR)ₙ-R⁵

wherein
n is an integer from 0 to 4,
m is an integer from 0 to 5,
R, R¹, R², R³ and R⁴ are each independently hydrogen or a C₁ to C₆ alkyl, R⁵ is a saturated cyclic hydrocarbon containing carbonyl group,

in the presence of a first catalyst to obtain a monomer, and polymerising said monomer in the presence of a second catalyst.

The present invention also provides a hydrophilic polysiloxane having the formula (III)

(III) EB-[B₁-B₂-B₃]ₖ-EB

wherein
EB is an end blocker group, B₁, B₂ and B₃ is independently selected from the group consisting of a -Si-O- chain comprising a hydrophilic group and a methyl group,a -Si-O- chain comprising two methyl groups and a -Si-O- chain comprising a vinyl group and a methyl group,
said B₁, B₂ and B₃ are randomly distributed along the chain of the polysiloxane, and k is an integer from 15 to 50 000.

The present invention further provides a hydrophilic polysiloxane obtainable by the method according to the present invention, as well as a method for manufacturing a hydrophilic siloxane elastomer, comprising cross-linking a polymer according to the present invention in the presence of a cross-linking catalyst and a hydrophilic siloxane elastomer thus obtained.

### SHORT DESCRIPTION OF THE DRAWINGS

Figure 1 presents an example of monomer synthesis according to an embodiment of the present invention.
Figure 2 presents an example of anionic ring-opening polymerisation according to an embodiment of the present invention.
Figure 3 presents an arrangement for measuring the drug release.
Figure 4 presents some drug permeation results measured with elastomers according to the present invention.

### DETAILED DESCRIPTION OF THE INVENTION

The present invention provides a method for manufacturing hydrophilic polysiloxanes, wherein a hydrido-containing cyclic siloxane is reacted with a hydrophilic molecule comprising a carbon-carbon double bond, having the general formula (I) or (II)

(I) H₂C=CH-(CHR)ₙ-O-(CHR¹CR²R³)ₘR⁴

(II) H₂C=CH-(CHR)ₙ-R⁵

wherein
n is an integer from 0 to 4,
m is an integer from 0 to 5,
R, R¹, R², R³ and R⁴ are each independently hydrogen or a C₁ to C₆ alkyl, R⁵ is a saturated cyclic hydrocarbon containing carbonyl group,
in the presence of a first catalyst to obtain a monomer, and polymerising said monomer in the presence of a second catalyst.

The present invention thus relates to a method for manufacturing hydrophilic polysiloxanes that provides polydimethyl siloxane polymers that can be cross-linked to form a more hydrophilic elastomer than the previously known PDMS elastomers. Such an elastomer allows an easy and accurate control of the release rate of the drug.

According to an embodiment of the invention the monomer is purified before the polymerisation. This allows the manufacture of an elastomer that is essentially free from catalyst residues from the hydrosilation reaction. When a platinum catalyst is used in this first step, the resulting elastomer made according to this embodiment is essentially platinum free, provided that no platinum is used in the cross-linking step.

The monomer obtained can be purified with any known method, such as by distillation under reduced pressure. The aim of the purification is the elimination of unreacted unsaturated starting material, alkylated products formed thereof and especially the elimination of the residues of the catalyst, such as platinum residues.

According to an embodiment the alkyl-substituted cyclic siloxane is selected from the group consisting of heptamethyl cyclotetrasiloxane and tetramethyl cyclotetrasiloxane. Also other cyclic siloxanes can be used, such as such as octamethyl cyclotetrasiloxane.

According to another embodiment the hydrophilic molecule is selected from the group consisting of allyl ethyl ether, allyl methyl ether, allyl propyl ether, allyl butyl ether, allyl pentyl ether, butyl vinyl ether, propyl vinyl ether, tert-pentyl vinyl ether and allyl acetate.

The reaction temperature in the hydrosilation reaction can vary from room temperature up to 250-300 °C, preferably it is from 20 to 170 °C and more preferably from 50 to 170 °C, even more preferably from 50 to 95 °C. It may be necessary to heat the reaction to 100°C or above, especially if the activity of the catalyst has been reduced by adding water to the reaction mixture or by slurrying the catalyst into diluent.

Suitable catalysts are, for example, platinum based or platinum complex based hydrosilylation catalysts that are described for example in US 3,220,972; US 3,715,334; US 3,775,452; US 3,814,730; US 4,421,903 and US 4,288,345. Some suitable catalysts are chloroplatinate, platinum-acetylacetonate, platinum divinyldisiloxane complex, hexamethyldiplatinum and complexes of platinum halides with different compounds having double bonds, such as ethylene, propylene, organic vinylsiloxanes or styrene. Also other catalysts, such as ruthenium, rhodium, palladium, osmium and iridium as well as their complexes, can be used.

According to a preferred embodiment the first catalyst is a platinum catalyst. As the monomer is preferably purified before polymerisation, the obtained polymer and further the obtained elastomer are platinum free, naturally provided that the cross-linking is not made with a platinum catalyst.

The polymerisation may be a homopolymerisation or a copolymerisation, in which case a comonomer is present in the polymerisation step. The comonomer can, for example, be a vinyl comonomer selected from the group consisting of vinyl containing cyclic and linear low molecular weight siloxanes, such as 1,3,5,7-tetravinyl-1,3,5,7-tetramethyl cyclotetrasiloxane. The cyclic siloxane can thus be copolymerised with different cyclic siloxanes and/or linear siloxanes.

The ring opening polymerisation is typically catalysed by either acidic or basic catalysts. Examples of suitable basic catalysts are alkaline metal hydroxides and their complexes with alcohols, alkaline metal alkoxides, alkaline metal silanolates and different phosphorous nitric halides. Preferred catalysts are potassium silanolates and phosphazene bases. Examples of suitable acidic catalysts are strong acids, such as sulphuric acid, acetic acid or trifluoromethane sulfonic acid, Lewis acids, such as boron trifluoride or aluminium chloride, or strongly acidic ion exchange resins.

The polymerisation can, for example, be carried out in a solvent, without a solvent or as an emulsion. In some cases, a suitable solvent can be used in order to regulate the reaction rate and in order to achieve a certain degree of polymerisation. If a solvent is used, some suitable solvents are liquid hydrocarbons such as hexane and heptane, silicones such as polydiorganosiloxanes, silanols such as trialkylsilanol and in some cases alcohols, such as alcohols comprising 1 to 8 carbon atoms. In some cases, the water present in the reaction renders the controlling of the reaction easier.

According to yet another embodiment an end-blocker is present in the polymerisation step. Said end-blocker can be selected from the group consisting of linear low molecular weight siloxanes, such as 1,1,3,3-tetravinyl dimethylsiloxane. The end-blocker can be used to regulate the molar mass of the polymer or to introduce functional groups to the polymer.

According to an embodiment of the invention said second catalyst is selected from the group consisting of phosphazene bases, ammonium silanolates, potassium silanolates, sodium silanolates, lithium silanolates and mixtures thereof.

Phosphazene bases are efficient catalysts in polymerisation reactions and the amount of catalyst used can be rather small, for example 1-2000 ppm based on the amount of siloxane, preferably 2-1000 ppm and more preferably 2-500 ppm. In practice, the amount of catalyst is also dependent on the reaction rate and the desired molar mass of the polymer. The amount of catalyst can be, for example, from 2 to 200 ppm.

Any suitable phosphazene base can be used as a catalyst, especially those that are in liquid form or that can be dissolved into a liquid. Some examples of commercially available phosphazene bases are 1-tert-butyl-4,4,4-tris(dimethylamino)-2,2-bis[tris(dimethylamino)-phosphoranylidenamino]-2Δ⁵,4Δ⁵-catenadi(phosphazene), 1-tert-butyl-2,2,4,4,4-pentakis(dimethylamino)- 2Δ⁵,4Δ⁵-catenadi(phosphazene) and 1-tert-octyl-4,4,4-tris(dimethylamino)-2,2-bis[tris(dimethylamino)-phosphoranylidenamino]-2Δ⁵,4Δ⁵-catenadi(phosphazene).

According to yet another embodiment tocopherol may be used as a co-catalyst in the polymerisation of the monomer. Tocopherol is also known as vitamin E, and can for example be in the form of D'L-alpha-tocopherol, RRR-alpha-tocopherol, D'L-alpha-tocopherol acetate or RRR-alpha-tocopherol acetate. Mixtures of these compounds can naturally also be used.

The reaction time in the polymerisation step can vary from 30 minutes to several hours, depending on the activity of the catalyst and on the desired product. The polymerisation temperature can vary from room temperature to 250 °C, preferably from 80 to 200 °C and more preferably from 120 to 150 °C.

The polymerisation reaction can be controlled by taking samples at regular intervals and by analysing them with any known method, such as following the molar mass by gel permeation chromatography. The polymerisation reaction can be stopped by adding a suitable neutralising reagent that inactivates the catalyst.

Typically, the catalyst residues can be removed from the product by any known method. Also typically, the reactions are performed under inert atmosphere, such as nitrogen.

The present invention also relates to hydrophilic polysiloxanes having the formula (III)

(III) EB-[B₁-B₂-B₃]ₖ-EB

wherein
EB is an end blocker group, B₁, B₂ and B₃ is independently selected from the group consisting of a -Si-O- chain comprising a hydrophilic group and a methyl group,a -Si-O- chain comprising two methyl groups and a -Si-O- chain comprising a vinyl group and a methyl group,
said B₁, B₂ and B₃ are randomly distributed along the chain of the polysiloxane, and k is an integer from 15 to 50 000.

According to one embodiment of the invention the hydrophilic group is selected from the group consisting of propylethylether, ethylbutylether, propylcyclohexanone, propylmethylether, dipropylether, propylbutylether, propylpentylether, ethylpropylether, ethyl-tert-pentylether and propylacetate.

According to another embodiment of the invention the end blocker group is selected from the group consisting of linear low molecular weight siloxanes.

The present invention also relates to hydrophilic polysiloxanes obtainable by the method mentioned above. The embodiments and options discussed above apply also to the polymers according to the present invention.

According to an embodiment of the invention the polymer material is curable, i.e. cross-linkable with a cross-linking catalyst. According to an embodiment, the cross-linking catalyst is a peroxide. Should it not be necessary that the elastomer is platinum-free, a platinum-based cross-linking catalyst can be used.

The present invention also relates to a method for manufacturing a hydrophilic siloxane elastomer, comprising cross-linking a polymer according to the present invention, as described above, in the presence of a cross-linking catalyst. The embodiments and options discussed above apply also to the method for manufacturing hydrophilic siloxane elastomers according to the present invention.

According to yet another aspect the present invention relates to hydrophilic siloxane elastomer obtainable by the method described above. The embodiments and options discussed above apply also to the elastomers according to the present invention.

The elastomer is typically manufactured by cross-linking using any known catalysts and/or initiators, such as peroxides, irradiation, hydrosilylation or condensation. For example, organic vinyl specific or non-specific peroxides can be used, such as di-tert-butylperoxide and 2,5-bis-(tert-butylperoxide)-2,5-dimethylhexane or benzoylperoxide, tert-butylperoxy-2-ethylhexanoate and/or 2,4-dichlorobenzoylperoxide. As mentioned above, a platinum-based cross-linking catalyst can also be used. The amount of catalyst varies, for example, from 0.1 to 5 parts per weight per 100 parts of siloxane.

Siloxane-based elastomer as used here can stand for an elastomer made of disubstituted siloxane units, wherein the substituents can be substituted or unsubstituted lower alkyls, preferably C₁ to C₆ alkyls or phenyl groups. A certain amount of the substituents attached to the silicon atoms are substituted oxyalkyl groups that are attached to the silicon atoms by a silicon-carbon bond.

By C₁ to C₆ alkyls in this context are meant methyl, ethyl, propyl, butyl, pentyl and hexyl and all their isomers.

In the following, when substituted oxyalkyl groups are mentioned, it is meant such substituted oxyalkyl groups that are attached to the silicon atoms by a silicon-carbon bond.

According to one embodiment the elastomer composition can be formed of one single cross-linked siloxane based polymer. According to another embodiment, the elastomer composition can be formed of two interpenetrating elastomers. The first elastomer can then comprise substituted oxyalkyl groups as described above, and the second elastomer can be a siloxane based elastomer, such as PDMS. The second elastomer can also comprise substituted oxyalkyl groups as described above.

According to yet another embodiment the elastomer composition may be a mixture comprising a siloxane based elastomer (for example PDMS) and at least one polysiloxane polymer or copolymer comprising substituted oxyalkyl groups. Also the siloxane based elastomer may comprise such substituted oxyalkyl groups.

The elastomer composition according to the present invention can be used as a membrane (or film) or matrix for regulating the release rate of a drug. By drug it is meant any kind of pharmaceutically active ingredient that can be administered into mammals. The membranes or films can be manufactured by any known method, such as by casting, extrusion, pressing, moulding, coating, spraying or dipping.

The drug release rate of the elastomer may be controlled by the amount of substituted oxyalkyl groups and/or by the properties of the drug. When using an elastomer composition comprising two interpenetrating elastomers or a mixture of elastomers and/or polymers, the drug release rate can be controlled more easily.

According to an embodiment the elastomer composition also comprises a filler, such as amorphous silica, in order to increase the strength of the film made from the elastomer composition. Other possible fillers include aluminium oxide, titanium oxide, calcium carbonate, various fibres and barium sulphate. The amount of filler depends on the nature of the filler and the use of the elastomer. Reinforcing fillers, such as silica, are typically used in an amount from 1 to 50, preferably from 15 to 40 parts per weight and the other fillers in an amount from 1 to 200 parts per weight.

### EXPERIMENTAL PART

In this experimental part, different polymerisable hydrophilically modified monomers were prepared. These monomers were then copolymerised with vinyl-functional comonomers. Prepared polymers were then mixed with silica and cured using a vinyl-specific peroxide.

### Monomer preparation

The monomers used were synthesised by hydrosilation of heptamethyl cyclotetrasiloxane (HMCTS, Clariant) and selected double-bond-containing hydrophilic molecules. Hydrophilic groups were mostly ether-like structures with a terminal double-bond. Platinum-divinyl tetramethyl disiloxane (Pt-DVTMDS, ABCR) complex was used as a catalyst for hydrosilation, in some occasions also solid platinum and palladium catalysts were tested. The vinyl/Si-H molar ratio was most often 1.1:1. Reactions were first carried out in 8 ml vials with simply heating the reaction mixture under stirring in oil bath. If this small scale experiment was successful, the next step was to scale up the reaction and to produce enough material to be distilled and polymerized. Most often temperature was about 65°C and used catalyst amount was 20 ppm.

Some components are mentioned below with their abbreviated names. For example,
HMCTS stands for heptamethyl cyclotetrasiloxane,
Pt-DVTMDS stands for platinum-divinyl tetramethyl disiloxane complex,
MV₄ stands for 1,3,5,7-tetravinyl-1,3,5,7-tetramethyl cyclotetrasiloxane,
MV₃ stands for 1 ,3,5-trivinyl-1 ,3,5-trimethyl cyclotrisiloxane,
D4gAME stands for 1,1,3,3,5,5,7-heptamethyl-7-propylmethylether cyclotetrasiloxane,
D4gAEE stands for 1,1,3,3,5,5,7-heptamethyl-7-propylethylether cyclotetrasiloxane,
D4gBVE stands for 1,1,3,3,5,5,7-heptamethyl-7-ethylbutylether cyclotetrasiloxane
D4gACHN stands for 1,1,3,3,55,7-heptamethyl-7-propylcyclohexanone cyclotetrasiloxane,
DMS-V21 stands for vinyl terminated polydimethylsiloxane, and
TBPEH stands for tert-butylperoxy-2-ethylhexanoate.

In these examples, four different derivatives were tested for monomer synthesis. Their structures, names, abbreviations and producers are presented in Table 1.

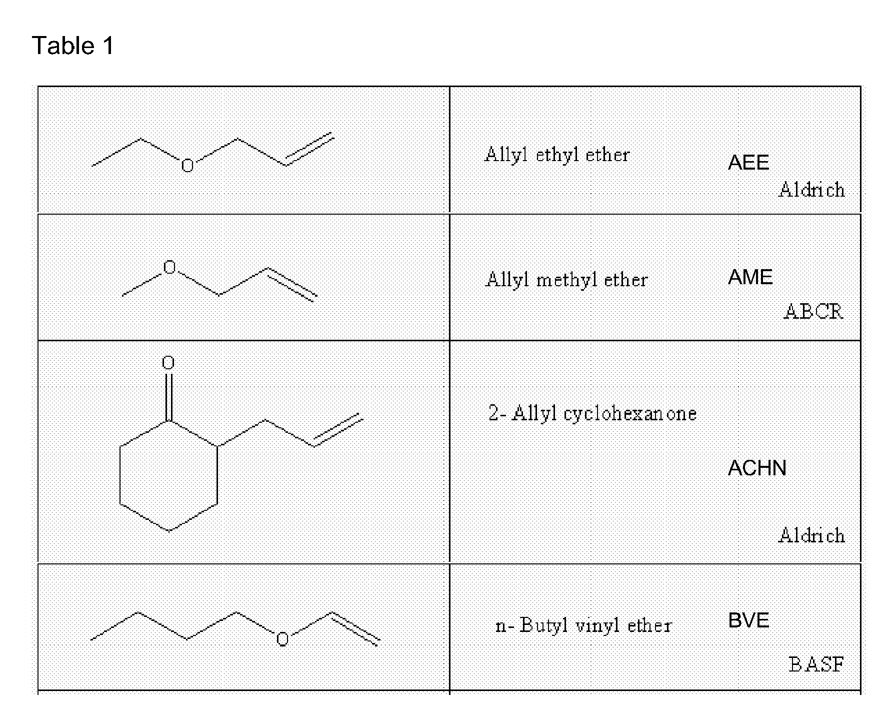

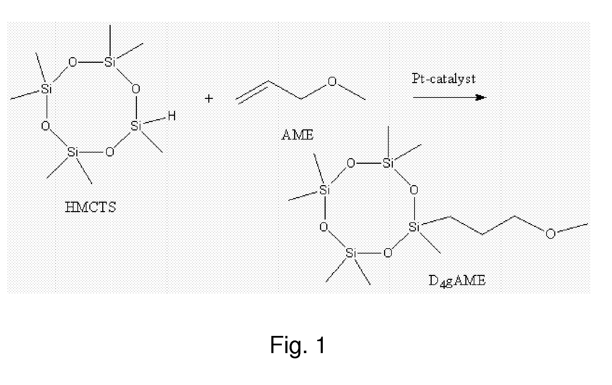

As hydrosilation takes place most easily in terminal double bonds, all of the tested molecules had one. Figure 1 presents a reaction scheme of synthesis of D₄gAME-monomer from heptamethyl cyclotetrasiloxane and allyl methyl ether via hydrosilation as an example of monomer synthesis.

Hydrosilation reactions were monitored by FT-IR (Nicolet 760). The reaction was noted to be ready when strong Si-H IR absorption at 2100 cm⁻¹ or C=C absorption at 1650 cm⁻¹ disappeared. In most cases the reaction time was about three hours and still some unreacted specimen remained, but butyl vinyl ether hydrosilated in less than half an hour completely leaving no leftover Si-H groups to the reaction mixture.

**Table 2**

| Derivative | Catalyst | Temperature | Reaction time | Comments |
|---|---|---|---|---|
| AME | Pt-DVTMDS | 55-60 °C | 2-3h | proceeded well |
| AEE | Pt-DVTMDS | 65 °C | 2,5h | proceeded well |
| BVE | Pt-DVTMDS | 65 °C | 15min | proceeded well |
| ACHN | Pt-DVTMDS | 70 °C | 2,5h | proceeded well |

Monomer synthesis was successfully carried out with allyl methyl ether, allyl ethyl ether, n-butyl vinyl ether and allyl cyclohexanone. These all reacted well at 65 °C with 20 ppm of Pt-DVTMDS catalyst. Reaction times varied quite much as can be seen from Table 2. Larger scale (100 g) reactions were carried out in 250 ml round-bottomed flasks with reflux condenser and nitrogen inlet attached. Catalyst had to be added carefully to the reaction mixture, because of the notable exotherm during the first steps of hydrosilation.

### Monomer purification

Before polymerisation monomers had to be distilled to achieve at least 95 % purity (determined as area-% from gas chromatograph peaks). Distillation was performed using microdistillation equipment, oil bath and vacuum pump. Pressure was reduced to below 10 mbar and most often oil-bath temperature had to be raised to about 110 °C until the main product was distilled. After the distillation, collected monomer distillate was revised for purity with GC-MS and dried with 4 A molecular sieves by adding about 20 volume-% of sieves to the monomer containers.

### Polymerisation

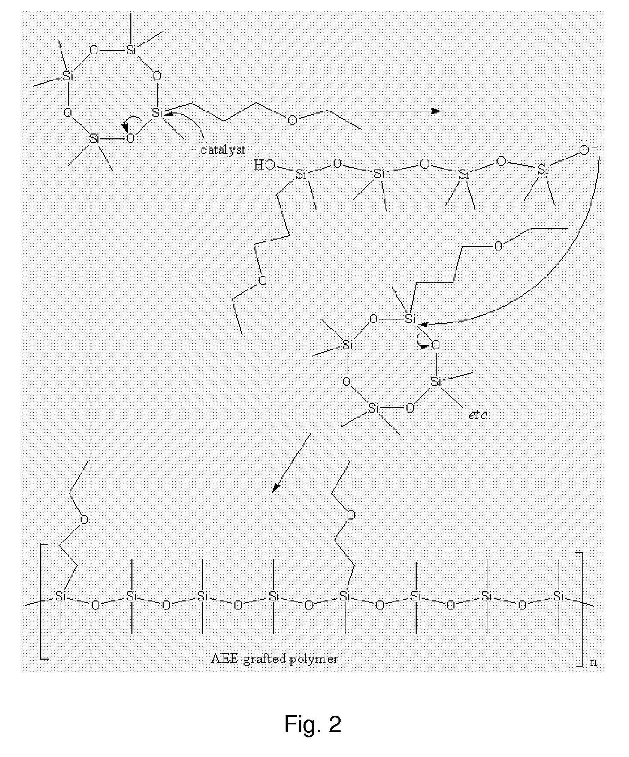

Polymerisation experiments were started at 8 ml vials with approximately 2 g of dried monomer and 50 ppm of catalyst. Different monomers and reaction conditions were tested. The reaction was an anionic ring-opening polymerisation, where both potassium silanolate and phosphazene base catalysts could be useful. Figure 2 shows a simplified scheme of anionic ring-opening polymerisation of D₄AEE. After successful results in this small scale, bigger batches of 10-50 g were made in 30 ml vials and in 100 ml three-neck flasks with reagents, like end-blockers, vinyl comonomers and additive as D'L-α-tocopherol.

All of the tested reagents and their purpose in polymerisation are presented in Table 3. Only one of each type was used in one experiment.

**Table 3**

| Substance | Purpose | Amount used |
|---|---|---|
| 1,3,5,7-tetravinyl-1,3,5,7-tetramethyl cyclotetrasiloxane (MV₄, SOY) | vinyl-containing comonomer | 0.10 wt-% |
| 1,3,5-trivinyl-1,3,5-trimethyl cyclotrisiloxane (MV₃, Gelest) | vinyl-containing comonomer | 0.70 wt-% |
| Vinylmethylsiloxane-dimethylsiloxane -copolymer, (Gelest) | vinyl-containing copolymer | 10 wt-% |
| 1,1,3,3-tetravinyl dimethylsiloxane, (ABCR) | end-blocker | 0.80 wt-% |
| Vinyl terminated polydimethyl siloxane, DMS-V21 (ABCR) | end-blocker | 1.20 wt-% |
| D'L-α-tocopherol (Roche) | additive | 0.01 wt-% |
| Potassium silanolate (SOY) | catalyst | 50 ppm |
| Phosphazene base (Fluka Chimika) | catalyst | 50 ppm |

Polymerisations were carried out under nitrogen atmosphere and vigorous stirring. Temperature was set to 150°C. Polymerisation time varied from half an hour to two hours, depending on the monomer and temperature. Most of the reactions were quite fast, but stirring and heating was continued for half an hour after the polymerisation occurred to achieve best possible polymerisation degree and yield. At the end the reaction was quenched with tris(trimethylsilyl)phosphate (Fluka Chimika).

A vinyl comonomer, such as 1,3,5,7-tetravinyl-1,3,5,7-tetramethyl cyclotetrasiloxane (MV₄), was added to the reaction medium. Also other vinyl-containing substances were tested (see Table 3). Good polymers were achieved using vinylmethylsiloxane- dimethylsiloxane-copolymer, but when these polymers were stored, some cross-linking occurred after a few days. A good solution to this problem was addition of D'L-α-tocopherol (vitamin E), that is an antioxidant and stabiliser. It prevented the unwanted cross-linking and also had a cocatalysing effect on polymerisation; lesser catalyst was needed to initiate the ring opening polymerisation. In Table 4 there are presented a few ring opening polymerisation experiments with D₄gBVE, where difference of experiments made with and without D'L-α-tocopherol can be easily seen.

**Table 4**

| Experiment | D'L-α-tocopherol | Temperature | Catalyst amount needed | Vinyl compound | Gel formation |
|---|---|---|---|---|---|
| 1 | no | 150 °C | 100 ppm | no | no |
| 2 | no | 150 °C | 150 ppm | yes (copolymer) | yes |
| 3 | no | 150 °C | 150 ppm | yes (MV₃) | no |
| 4 | no | 150 °C | 250 ppm | yes (MV₄) | yes |
| 5 | no | 150 °C | 300 ppm | yes (MV₄) | no |
| 6 | yes | 150 °C | 50 ppm | yes (copolymer) | no |
| 7 | yes | 150 °C | 50 ppm | yes (MV₃) | no |
| 8 | yes | 150 °C | 50 ppm | yes (MV₄) | no |
| 9 | yes | 150 °C | 50 ppm | yes (MV₄) | no |
| 10 | yes | 150 °C | 50 ppm | yes (MV₄) | no |

In Table 5 there is a summary of the polymerisation experiments made for all of the derivatised monomers.

**Table 5**

| Monomer | Catalyst | Catalyst amount | Temperature | Additive compounds tested | Mw - range (weight average masses) |
|---|---|---|---|---|---|
| D₄gAEE | potassium silanolate | 50-500 ppm | 100-150 °C | D'L-α-tocopherol | 50000-140000 g/mol |
| D₄gAEE | phosphazene base | 50-200 ppm | 120-150°C | D'L-α-tocopherol, MV₃, MV₄, vinyl-copolymer, end-blockers | 120000-190000 g/mol |
| D₄gBVE | phosphazene base | 50-200 ppm | 100-150°C | D'L-α-tocopherol, MV₃, MV₄, vinyl- copolymer, end-blockers | 120000-200000 g/mol |
| D₄gACHN | phosphazene base | 50-600 ppm | 110-150°C | D,L-α-tocopherol, MV4, triethylamine | circa 50000 g/mol |

### Removal of low-molecular weight compounds

Low-molecular weight compounds had to be removed from polymer before further processing. If these compounds were left in, resulting elastomer would have poor tensile strength and too large amount of extractable material. Low-molecular weight substances were evaporated from polymer using microdistillation equipment and vacuum pump at small scale. This was not the most effective way to remove the volatiles, so some polymer samples were combined to be able to create large volume enough for using short path distillation device (VTA, VKL 70-4-SKR-T Short Path Distillation Unit). Short path distillation unit was equipped with a vacuum- and diffusion pump and an oil circulating system (Huber, Unistat 385w Circulation Thermolat).

In small scale when microdistillation apparatus was used, temperature was raised to 120 °C and pressure was less than 2 mbar. In bigger scale when short path distillation equipment was used, temperature was 90 °C and pressure about 0.2 mbar.

### Elastomer preparation

After stripping, the polymer was compounded in a small laboratory mixer with 25 wt-% of dried silica (Aerosil R 106) and 1.5 wt-% of tert-butylperoxy-2-ethylhexanoate (TBPEH). Silica was added gradually in half gram quantities, and the base was mixed for 15 minutes to achieve a homogenous material.

Sample membranes for permeability tests were prepared using laboratory thermal press (Enerpac) with 0.4 mm thick round spacer mould. Material was pressed between release liners and metal plates with 100 bar oil pressure at 120 °C for six minutes.

Slabs for mechanical testing were prepared similarly to permeability samples, but a different, 2 mm thick rectangle shaped (6.1 cm x 8.2 cm) spacer was used.

Elastomer films were subsequently post-cured at 100°C and under 10 mbar pressure for one hour. Especially Poly(D₄gAEE) 2 mm thick films got a little yellowish colour during post-cure.

### Characterisation

### Monomer analysis with GC-MS

A gas chromatograph-mass spectrometry (GC-MS) equipment (Agilent Technologies) was used to characterise the synthesised monomers. Samples were diluted in n-hexane (approximately 0.1 mg/ml) and two injections were taken from each sample. Yields and purity were estimated as area-% of GC peaks and main impurities and side-products were identified from MS spectra, if necessary. The biggest impurity in all of the experiments was the starter material, heptamethyl cyclotetrasiloxane.

### Polymer analysis with GPC

Number- and mass-average molar masses and polydispersity were determined from the synthesised polymers using gel permeation chromatography (GPC). Used GPC equipment consisted of pump (Waters 515), injector (Waters 717Plus), RI-Detector (Waters 2414) and column oven (Perkin-Elmer Model 101 LC Column Oven). Analysis was carried out with five columns and polystyrene standards. Molar masses were determined at range of 162 - 1000000 g/mol.

Samples were prepared by diluting polymer to toluene (J.T.Baker). Toluene was used also as a carrier solution. Flow was set to 0.3 ml/min. Toluene was run through the equipment the night before measurements were done to stabilise the flow, and to cleanse the columns and injector.

### Analysis of drug Permeability

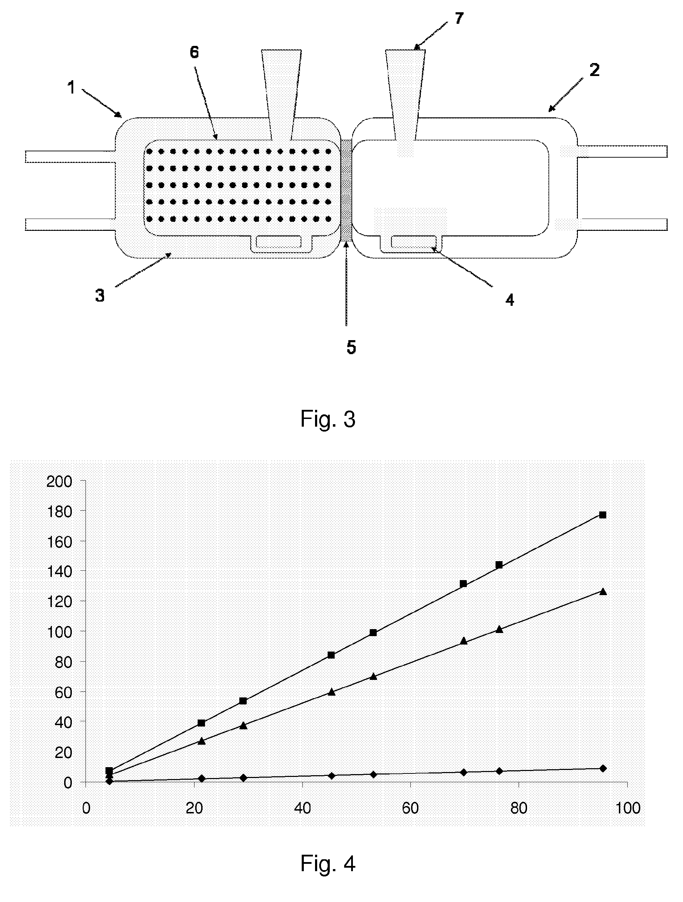

Drug permeability measurements were carried out using side-bi-side diffusion cells presented schematically in Figure 3. The system consisted of two similar glass chambers, the donor cell 1 and the receptor cell 2, surrounded by water jackets 3 and equipped with magnetic stirrers 4. The donor cell 1 had saturated concentration of estradiol in 1 % cyclodextrin solution (reference number 6). Estradiol diffused through elastomer membrane 5 set between the cells to receptor cell 2 containing a solution (1 % cyclodextrin). Used membrane thicknesses were 0.2 and 0.4 mm, each membrane was measured accurately.

Testing time was five days, and every day two 2.8 µl samples were taken from the receptor cell solution via the sampling port 7. After sampling, the taken amount of solution was replaced with pure 37 °C cyclodextrin. Temperature was kept steady at 37 °C with water bath (Lauda) to simulate the conditions in human body.

Taken solution samples were analyzed for estradiol by high performance liquid chromatography (HPLC). From HPLC concentration results, the permeations were calculated by plotting measured concentrations towards time and finding the slope of linear trend-line of plotted points.

### Tensile strength and elongation

Samples for tensile strength measurements were die-cut from pressed elastomer pieces with desired thickness (2 mm). Test samples were ISO 37 type 2 specimens. Tensile strength was measured using Monsanto T2000 apparatus with 100 N or 1 kN cell. High extensiometer (Gauge length 20 mm) was attached to the equipment to be able to measure the elongation. Rate of extension was 500 mm/min. Before analysis the samples were kept at constant room temperature and moisture for 24 hours (23 °C, 50 %).

### Extractable material

Amount of hexane-extractable material from elastomer was determined by weighing 0.3 g of elastomer to 30 ml vial and adding 20 ml of n-hexane. Three parallel measurements were carried out. Samples were shaken for 24 hours at room temperature and on the next day hexane solution was decanted. Solid samples were rinsed with fresh hexane once more and dried in vacuum oven at 40 °C and at pressure lower than 10 mbar for an hour. After drying, samples were stabilised at room temperature for yet another hour and then weighed. Extractables were calculated as percentage of mass difference between samples before and after treatment.

In addition extractions were analyzed with GPC and GC (Agilent Technologies 6890 N Network GC System, FID detector) to be able to evaluate the amount of common cyclics (D₄-D₆) in extracted solution and possible larger fragments of extracted species.

### Results

### Synthesis and Polymers

From all the four tested derivatised monomer candidates two were eventually processed through the whole synthesis route from monomer to elastomer.

Polymer synthesis was carried out successfully with D₄gAEE and D₄gBVE. The molar masses were mostly of the order of 140 000 g/mol.

### Drug permeability

Target permeation was ten times that of reference elastomer, an unmodified PDMS. In Figure 4 there is plotted results of the estradiol permeation measurements for poly(D₄gAEE), poly(D₄gBVE) and reference PDMS elastomer membranes. The time in hours in shown in abscissa and the amount of estradiol released in µg is shown in ordinate. The squares stand for poly(D₄gAEE), the triangles stand for poly(D₄gBVE) and the diamonds for the references PDMS elastomer.

### Tensile strength and elongation

Results of tensile strength and elongation measurements are presented in Table 6. First samples were measured without post-curing and with 1 kN cell whereas other set of samples was analysed after post-cure and with 100 N cell. Polymers used for post-cured samples were stripped with more effective short path distillation unit.

**Table 6**

| Polymer | post-cure | Stress/MPa | Elongation |
|---|---|---|---|
| Poly(D₄gAEE) | no | 2.8 | 190 % |
| Poly(D₄gBVE) | no | 2.3 | 158 % |
| Poly(D₄gAEE) | yes | 2.6 | 127 % |
| Poly(D₄gBVE) | yes | 3.2 | 132 % |

### Extractable material

Extractables were measured both with and without post-curing. Results are presented in Table 7. Polymer used for post-cured samples were stripped with more effective short path distillation unit.

**Table 7**

| Polymer | post-cure | extracted material, wt-% |
|---|---|---|
| Poly(D₄gAEE) | no | 15.70 % |
| Poly(D₄gBVE) | no | 14.30 % |
| Poly(D₄gAEE) | yes | 11.50 % |
| Poly(D₄gBVE) | yes | 6.90 % |

## Claims

1. A method for manufacturing hydrophilic polysiloxanes, wherein a hydrido-containing cyclic siloxane is reacted with a hydrophilic molecule comprising a carbon-carbon double bond, having the general formula (I) or (II)
(I) H₂C=CH-(CHR)ₙ-O-(CHR¹CR²R³)ₘR⁴
(II) H₂C=CH-(CHR)ₙ-R⁵
wherein
n is an integer from 0 to 4,
m is an integer from 0 to 5,
R, R¹, R², R³ and R⁴ are each independently hydrogen or a C₁ to C₆ alkyl, R⁵ is a saturated cyclic hydrocarbon containing carbonyl group,
in the presence of a first catalyst to obtain a monomer, and polymerising said monomer in the presence of a second catalyst.

2. The method according to claim 1, **characterised in that** the hydrido-containing cyclic siloxane is selected from the group consisting of heptamethyl cyclotetrasiloxane and tetramethyl cyclotetrasiloxane.

3. The method according to any of the preceding claims, **characterised in that** the hydrophilic molecule is selected from the group consisting of allyl ethyl ether, allyl methyl ether, allyl propyl ether, allyl butyl ether, allyl pentyl ether, butyl vinyl ether, propyl vinyl ether, tert-pentyl vinyl ether and allyl acetate.

4. The method according to any of the preceding claims, **characterised in that** the first catalyst is a platinum catalyst.

5. The method according to any of the preceding claims, **characterised in that** further a comonomer is present in the polymerisation step.

6. The method according to claim 5, **characterised in that** the comonomer is a vinyl-comonomer selected from the group consisting of vinyl containing cyclic and linear low molecular weight siloxanes.

7. The method according to any of the preceding claims, **characterised in that** further an end-blocker is present in the polymerisation step.

8. The method according to claim 7, **characterised in that** the end-blocker is selected from the group consisting of linear low molecular weight siloxanes.

9. The method according to any of the preceding claims, **characterised in that** the second catalyst is selected from the group consisting of phosphazene bases, ammonium silanolates, potassium silanolates, sodium silanolates, lithium silanolates and mixtures thereof.

10. The method according to any of the preceding claims, **characterised in that** said monomer is purified before the polymerisation.

11. The method according to claim 1, **characterised in that** tocopherol is used as a co-catalyst in the polymerisation of the monomer.

12. A hydrophilic polysiloxane having the formula (III)
(III) EB-[B₁-B₂-B₃]ₖ-EB
wherein
EB is an end blocker group, B₁, B₂ and B₃ is independently selected from the group consisting of a -Si-O- chain comprising a hydrophilic group and a methyl group,a -Si-O- chain comprising two methyl groups and a -Si-O- chain comprising a vinyl group and a methyl group,
said B₁, B₂ and B₃ are randomly distributed along the chain of the polysiloxane, and k is an integer from 15 to 50 000.

13. The polysiloxane according to claim 12, **characterised in that** the hydrophilic group is selected from the group consisting of propylethylether, ethylbutylether, propylcyclohexanone, propylmethylether, dipropylether, propylbutylether, propylpentylether, ethylpropylether, ethyl-tert-pentylether and propylacetate.

14. The polysiloxane according to claim 12 or 13, **characterised in that** the end blocker group is selected from the group consisting of linear low molecular weight siloxanes.

15. A hydrophilic polysiloxane obtainable by the method of claim 1.

16. A method for manufacturing a hydrophilic siloxane elastomers, comprising cross-linking a polysiloxane according to claim 12 in the presence of a cross-linking catalyst.

17. The method according to claim 16, **characterised in that** said cross-linking catalyst is selected from the group consisting of peroxide cross-linking catalyst and platinum cross-linking catalyst.

18. A hydrophilic siloxane elastomer obtainable by the method of claim 16.
